# FASCICULE DE BREVET EUROPEEN

(11) **EP 3 104 320 B1**
(45) Date de publication et mention de la délivrance du brevet: **15.08.2018**
(21) Numéro de dépôt: 15171811.1
(22) Date de dépôt: 12.06.2015
(51) Int. Cl.: G06Q 20/32, H04L 29/06

(54) **PROCÉDÉ DE PROGRAMMATION DE DONNÉES BANCAIRES DANS UN CIRCUIT INTÉGRÉ D'UNE MONTRE**
VERFAHREN ZUR PROGRAMMIERUNG VON BANKDATEN IN EINEM INTEGRIERTEN SCHALTKREIS EINER ARMBANDUHR
METHOD FOR PROGRAMMING BANK DATA IN AN INTEGRATED CIRCUIT OF A WATCH

(43) Date de publication de la demande: 14.12.2016
(73) Titulaire: EM Microelectronic-Marin SA, 2074 Marin (CH)
(72) Inventeur: Salgado, Stéphanie, 2520 La Neuveville (CH)
(74) Mandataire: Giraud, Eric

(56) Documents cités:
- WO-A1-2009/039419
- WO-A2-2007/088203
- US-A- 5 623 637

## Description

### DOMAINE TECHNIQUE

La présente invention concerne un procédé de programmation de données secrètes ou de sécurité, telles que des données bancaires dans un circuit intégré spécifique d'un objet portable, tel qu'une montre notamment pour pouvoir effectuer des opérations de paiement.

La présente invention concerne également l'objet portable, tel qu'une montre, muni du circuit intégré spécifique à données secrètes ou de sécurité, telles que des données bancaires personnalisées et programmées selon le procédé de programmation.

### ARRIERE-PLAN TECHNOLOGIQUE

Il est connu des objets portables connectés, qui permettent d'effectuer plusieurs fonctions. Il peut s'agir typiquement d'un téléphone mobile muni d'un module de communication. Le téléphone mobile peut utiliser plusieurs protocoles de communication, tels que le protocole Wi-Fi, le protocole Bluetooth ou le protocole NFC. Ces téléphones mobiles peuvent alors être utilisés pour opérer des fonctions dites connectées, telles que le paiement sans contact, la billetterie électronique ou l'accès sans contact.

Pour le paiement de produits ou services, il peut être utilisé également comme objet portable une carte à puce sécurisée et personnalisée. Cette carte à puce peut être munie de moyens de communication à courte distance NFC par une antenne avec un dispositif de lecture de l'endroit de fourniture de produits ou services. Une communication à courte distance selon le protocole NFC est généralement utilisée pour les opérations de vérification des données bancaires enregistrées dans ladite carte à puce et le paiement subséquent du produit ou service désiré.

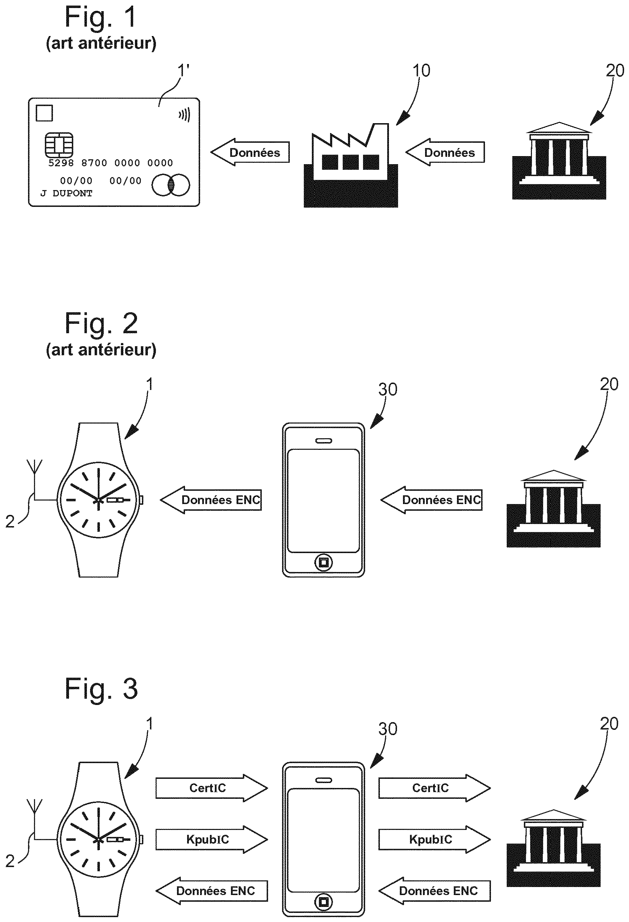

Comme montré à la figure 1, chaque carte à puce 1', utilisée pour le paiement de produits ou services, doit être personnalisée lors de sa fabrication chez un fabricant de cartes 10 reconnu et autorisé par des instituts bancaires 20. Un tel fabricant de cartes reconnu est par exemple OBerthur, Gemalto ou G&D. Les données bancaires, telles que des justificatifs ou pièces d'identité, un numéro de compte bancaire, doivent être chargées dans la puce de la carte dans un environnement à haute sécurité.

Ces données bancaires sont reçues par le fabricant de cartes 10 en provenance de la banque ou de l'institut financier ou bancaire 20 du titulaire de la carte à fabriquer. La puce de la carte doit être certifiée généralement par Eurocard, Mastercard ou Visa chez un fabricant de puces spécifiques, tel que NXP ou Infineon par exemple. Lors de la fabrication de la carte chez le fabricant de cartes 10, aussi bien le titulaire que la banque sont connus. Les données bancaires sont alors chargées dans la puce lors de la fabrication de la carte chez le fabricant de cartes. Finalement la carte fabriquée est ensuite transmise au titulaire de la carte 1' avec tous les justificatifs d'identité des données bancaires personnalisées.

Comme montré à la figure 2, un autre type d'objet connecté peut être une montre 1, qui peut être utilisée également pour le paiement sans contact. Cette montre 1 comprend une puce ou circuit électronique intégré dédicacé à la fonction paiement. Cette puce de paiement peut être mise à disposition par l'institut bancaire 20 et placée sur un support, que l'on vient ensuite insérer dans un logement spécifique du produit, ou alors une puce vierge placée directement dans le produit et programmée ensuite par l'institut bancaire 20.

La puce peut être munie de moyen ou interface de communication à courte distance NFC en liaison avec une antenne 2 pour la réception et l'émission de données. Pour programmer ladite puce vierge de la montre 1, il peut être utilisé un algorithme de cryptage/décryptage symétrique ou asymétrique pour une communication avec une banque 20 du titulaire d'un compte à programmer dans la puce.

Dans le cas d'un cryptage/décryptage symétrique, la puce peut comprendre en mémoire un jeu de clés secrètes. Ces clés secrètes sont des données de cryptage/décryptage, des données pour vérifier l'intégrité ou identité et des données pour authentifier l'utilisateur externe, qui peut être la montre. L'institut financier ou bancaire 20 authentifie directement la montre sur la base des données d'authentification mémorisées dans la puce de montre. Une fois que la montre est authentifiée, l'institut financier ou bancaire 20 crypte des données bancaires et vérifie encore les références d'identité et données de cryptage/décryptage avec un algorithme symétrique (DES ou AES). Après cela, les données cryptées ENC sont transmises à destination de la puce de montre.

Comme une communication à courte distance NFC est opérée par la montre, il doit encore être utilisé un terminal intermédiaire de communication à longue distance. Ce terminal ou moyen de communication peut être un téléphone portable 30, qui est disposé à courte distance de la montre pour une communication selon le protocole NFC. Les données bancaires cryptées ENC par la banque 20 passent donc par le téléphone 30 en communication avant d'être reçues par la montre 1. Finalement, la puce de montre 1, qui a reçu les données cryptées ENC, est à même de décrypter ces données ENC et les mémoriser.

Un problème pour programmer la puce avec un cryptage symétrique, est de savoir comment la banque et la montre peuvent partager les clés secrètes. Une fois fabriquée, la montre n'a pas encore connaissance de la banque. Ainsi les clés ne peuvent pas être uniquement transmises à la banque finale, mais sont distribuées à toutes les banques, ce qui constitue un inconvénient.

Dans le cas d'un cryptage/décryptage asymétrique, la puce de montre 1 garde en mémoire des données temporaires, qui sont une clé privée associée à une clé publique, qui est transmise à toutes les banques 20. Depuis la banque, il peut être utilisé un algorithme de cryptage et décryptage asymétrique, par exemple du type RSA (des inventeurs Ronald Revest, Adi Shamir et Léonard Adleman). La banque effectue un cryptage des données bancaires spécifiques au titulaire du compte bancaire, avec la clé publique de la puce de la montre 1 avant de transmettre ces données cryptées ENC.

Comme décrit précédemment une communication à courte distance NFC est opérée par la montre, il doit encore être utilisé un terminal intermédiaire de communication à longue distance, tel qu'un téléphone portable 30. Les données bancaires cryptées par la banque passent donc par le téléphone en communication avant d'être reçues par la montre 1. Finalement, la puce de montre 1, qui a reçu les données cryptées ENC, est à même de décrypter ces données ENC par sa clé privée et de mémoriser ces données bancaires spécifiques au titulaire de la montre dans une mémoire non volatile. Un verrouillage de ces données bancaires peut encore être effectué dans la puce.

Il est à noter qu'en utilisant le cryptage asymétrique pour pouvoir effectuer un procédé de programmation de données bancaires dans la puce de montre, les banques ne connaissent que la clé publique, ce qui est avantageux. Par contre, il est nécessaire d'avoir une base de données avec toutes les clés publiques des puces de montre à personnaliser. Cette base de données peut devenir très grande en fonction du nombre de puces de montre à personnaliser. De plus, il n'y a pas toute la sécurité requise pour cette programmation de données bancaires, étant donné qu'il est utilisé un terminal de communication, tel qu'un téléphone mobile. Cela constitue des inconvénients.

Dans le même ordre d'idée de l'utilisation d'un cryptage asymétrique, on peut citer à ce titre le brevet CH 699 083 B1. Dans ce brevet, il est décrit un procédé pour une certification numérique de l'authenticité d'un objet physique, tel qu'une montre, de manière à le protéger contre une falsification. Le certificat numérique est bien obtenu par la génération de clés publique et privée mémorisées dans une puce pour un cryptage asymétrique. Une autorité de certification et/ou validité est également prévue pour contrôler l'authenticité de la montre de luxe. Cependant rien n'est prévu pour effectuer une programmation sécurisée d'une puce d'une montre pour une utilisation lors de paiement sans contact d'un produit ou d'un service. Le document US 5623637 décrit une carte à stockage de données cryptées comprenant un circuit intégré Smartcard; la carte à puce peut communiquer des données sécurisées en utilisant un algorithme de cryptage asymétrique avec un ordinateur éloigné.

### RESUME DE L'INVENTION

L'invention a donc pour but de pallier aux inconvénients de l'état de la technique susmentionné en fournissant un procédé de programmation de données secrètes ou de sécurité, telles que des données bancaires dans un circuit intégré dédicacé d'une montre en garantissant toute la sécurité de programmation dans un environnement non sécurisé. La programmation du circuit intégré spécifique de la montre en liaison avec une antenne, permet notamment de pouvoir effectuer des opérations de paiement.

A cet effet, l'invention concerne un procédé de programmation de données secrètes ou de sécurité, telles que des données bancaires dans un circuit intégré spécifique d'une montre, qui comprend les caractéristiques définies dans la revendication indépendante 1.

Des étapes particulières du procédé de programmation sont définies dans les revendications dépendantes 2 à 7.

Un avantage du procédé de programmation réside dans le fait qu'il permet de transmettre des données cryptées depuis un institut financier ou bancaire suite à la vérification d'un certificat numérique dédicacé au circuit intégré et transmis par la montre à l'institut avec la clé publique dudit circuit intégré. La transmission des données cryptées de l'institut bancaire à destination du circuit intégré ou puce de la montre peut passer à travers un terminal de communication non sécurisé sans nuire à la sécurité de la programmation unique du circuit intégré. Le circuit intégré peut décrypter les données cryptées avec sa clé privée, afin de les mémoriser, ce qui permet d'utiliser la montre munie du circuit intégré spécifique pour effectuer un paiement sans contact d'un produit ou d'un service en communication à courte distance avec un lecteur spécifique.

Avantageusement avec ce procédé de programmation, on n'a pas besoin de connaître l'entité, qui transmet les données cryptées, car ces données ne peuvent être décryptées qu'au moyen de la clé privée du titulaire de la montre, qui est associée à la clé publique utilisée pour le cryptage des données. De plus, la vérification du certificat numérique est effectuée dans l'institut financier ou bancaire au moyen d'une clé publique d'une autorité de certification, qui a généré le certificat numérique pour le circuit intégré de la montre sur la base de la clé privée de l'autorité de certification et de la clé publique du circuit intégré de la montre.

L'invention a également pour but de fournir un objet portable, tel qu'une montre munie du circuit intégré spécifique à données secrètes ou de sécurité, telles que des données bancaires personnalisées et programmées selon le procédé de programmation.

A cet effet, l'invention concerne un objet portable muni du circuit intégré spécifique à données secrètes ou de sécurité, telles que des données bancaires, programmées selon le procédé de programmation, et qui comprend les caractéristiques définies dans la revendication indépendante 8.

Des formes particulières d'exécution de l'objet portable sont définies dans les revendications dépendantes 9 à 12.

### BREVE DESCRIPTION DES FIGURES

Les buts, avantages et caractéristiques du procédé de programmation de données secrètes ou de sécurité dans un circuit intégré spécifique d'un objet portable, tel qu'une montre, et l'objet portable muni dudit circuit spécifique apparaîtront mieux dans la description suivante sur la base d'au moins une forme d'exécution non limitative illustrée par les dessins sur lesquels :
- la figure 1 déjà citée représente schématiquement la manière d'opérer une personnalisation standard d'une carte à puce avec des données bancaires de l'état de la technique,
- la figure 2 déjà citée représente schématiquement la manière d'opérer une personnalisation standard d'une puce d'une montre avec des données bancaires de l'état de la technique,
- la figure 3 représente schématiquement la manière de programmer un circuit intégré spécifique d'un objet portable, tel qu'une montre de manière personnelle avec des données secrètes ou de sécurité, telles que des données bancaires provenant d'un institut financier ou bancaire selon l'invention,
- les figures 4a et 4b représentent la montre avec le circuit intégré spécifique ou dédicacé pour des opérations de paiement avant et après la programmation obtenue par le procédé de programmation selon l'invention, et
- la figure 5 représente les différentes étapes du procédé de programmation du circuit intégré spécifique de la montre selon l'invention.

### DESCRIPTION DETAILLEE DE L'INVENTION

Dans la description suivante, tous les moyens utilisés pour la programmation de données secrètes ou de sécurité dans un objet portable, qui sont bien connus de l'homme du métier dans ce domaine technique ne seront relatés que de manière simplifiée. L'accent principal porte sur la programmation de données secrètes ou de sécurité dans la puce ou circuit intégré d'un objet portable selon une technique de cryptage et décryptage asymétrique.

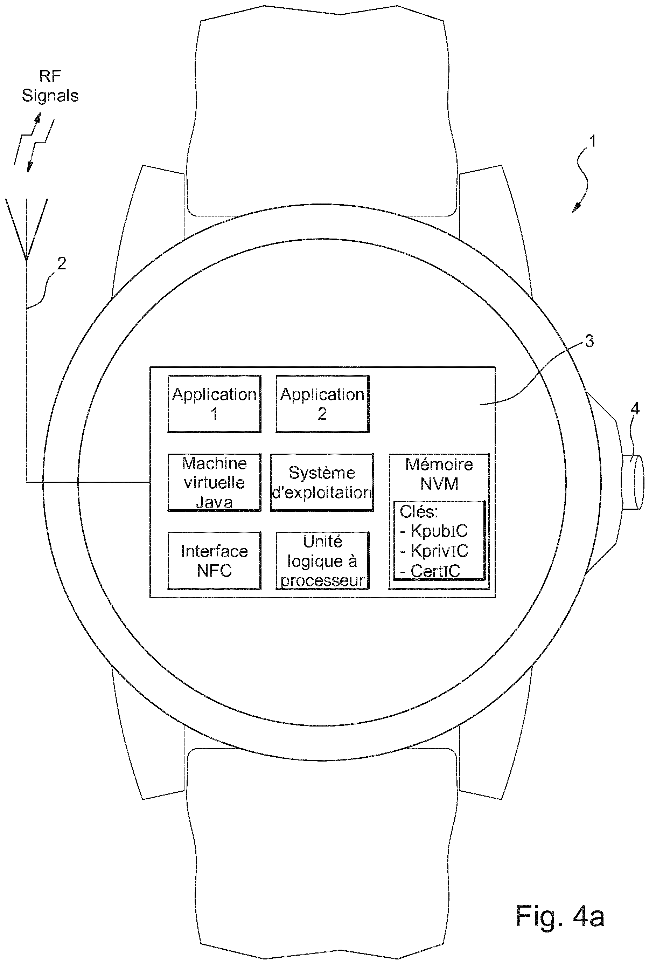

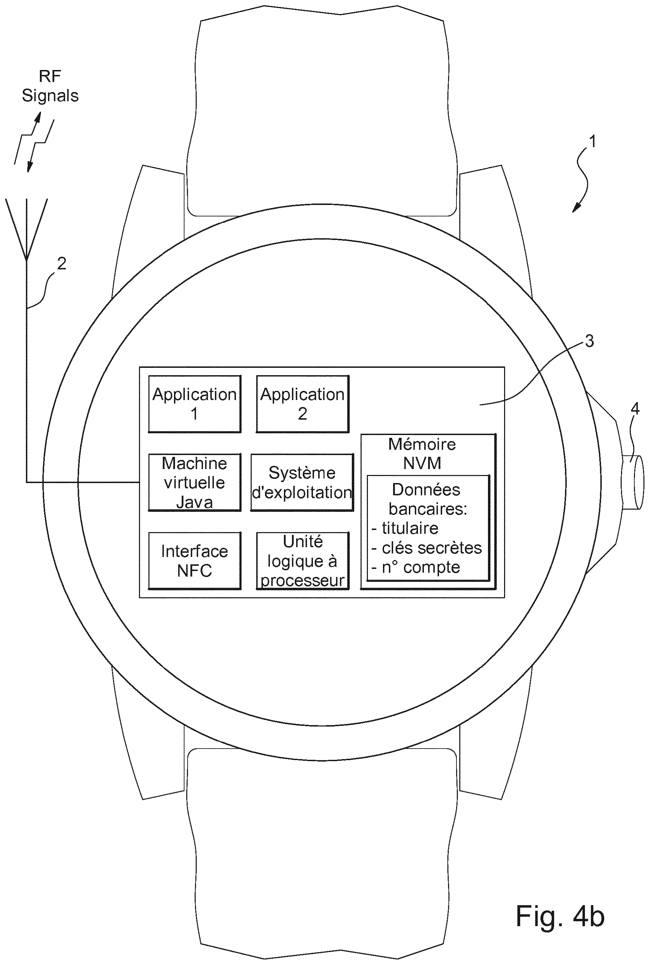

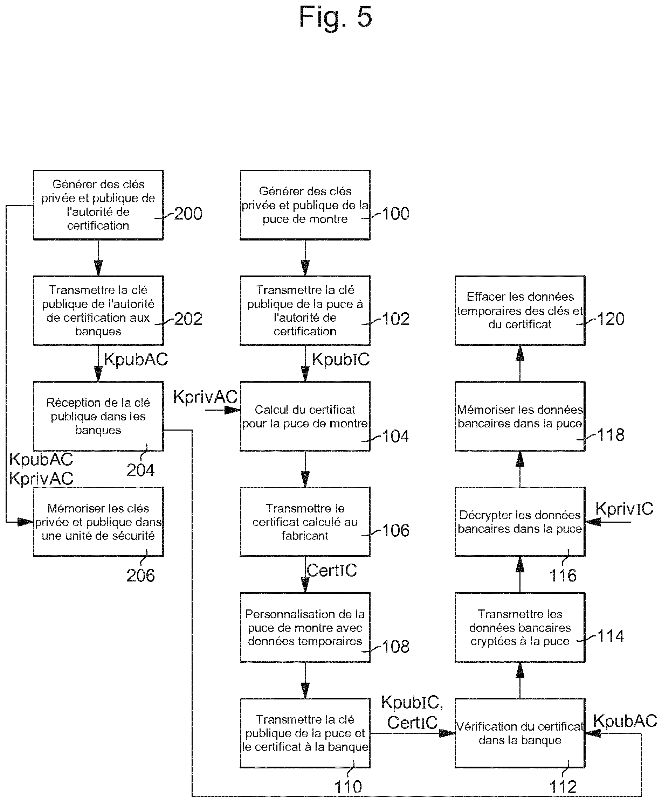

La figure 3 représente schématiquement les différents éléments pour la programmation de données secrètes ou de sécurité dans un circuit intégré spécifique d'un objet portable, tel qu'une montre 1. Comme expliqué ci-après de manière plus détaillée en référence aux figures 4a, 4b et 5, la puce ou circuit intégré spécifique de la montre 1 peut mémoriser au moins de manière temporaire avant programmation une clé privée KprivIC, une clé publique associée KpubIC et un certificat numérique du circuit CertIC. Ce certificat numérique, comme une signature numérique, peut être généré par une autorité de certification sur la base de la clé publique de la puce de la montre et d'une clé privée KprivAC de l'autorité de certification. Cette autorité de certification peut être directement l'entreprise ayant fabriqué l'objet portable notamment la montre, par exemple l'entreprise Swatch.

Pour la programmation de données secrètes ou de sécurité, telles que des données bancaires, l'objet portable, tel qu'une montre 1, transmet par une antenne 2 et selon un protocole de communication à courte distance NFC, le certificat numérique CertIC, ainsi que la clé publique du circuit intégré KpubIC. L'antenne peut être disposée dans la boîte de montre sous la lunette de montre et comprendre plusieurs spires coaxiales de diamètre voisin du diamètre du cadran ou de la carrure de montre.

Comme il est effectué une communication à courte distance NFC depuis la montre, il est nécessaire de passer par l'intermédiaire d'un moyen ou terminal de communication à longue distance, tel qu'un téléphone mobile 30. Ce téléphone mobile 30 est agnostique et agit comme un tunnel de communication. Selon les fonctions prévues dans le téléphone mobile, il peut y avoir un établissement automatique d'un contact sans fil avec la montre jusqu'à une distance de l'ordre de 30 cm. Une communication est également établie entre le téléphone mobile 30 et un institut financier 20, dans lequel le titulaire de l'objet portable peut comprendre au moins un compte bancaire.

Suite à la réception du certificat numérique CertIC spécifique à la montre, ainsi que la clé publique du circuit intégré KpubIC, l'institut financier ou bancaire 20 vérifie tout d'abord le certificat numérique au moyen de la clé publique KpubAC de l'autorité de certification. Si la vérification du certificat numérique est acceptée, la clé publique de l'objet portable, tel que la montre 1, est validée. Les données secrètes ou de sécurité notamment du titulaire du compte bancaire, sont cryptées au moyen de la clé publique KpubIC de la montre 1, et une transmission de ces données cryptées ENC est effectuée depuis l'institut financier ou bancaire 20. Ces données ENC sont tout d'abord reçues par le téléphone mobile 30 avant d'être transmises par l'intermédiaire de l'antenne 2 de la montre 1, au circuit intégré spécifique de la montre.

Dès réception des données cryptées ENC, le circuit intégré spécifique de la montre 1 peut décrypter ces données ENC au moyen de sa clé privée KprivIC mémorisée au moins temporairement dans une mémoire. Les données secrètes ou de sécurité, telles que les données bancaires en relation au compte du titulaire de la montre, peuvent être mémorisées dans la mémoire, de préférence dans la mémoire non-volatile et éventuellement verrouillées dans la mémoire.

Une fois les données personnelles du titulaire de la montre mémorisées dans le circuit intégré spécifique, le circuit intégré relié à l'antenne 2 de montre peut servir à tout paiement sans contact. Ce paiement sans contact s'opère en communication à courte distance NFC avec un lecteur d'un lieu spécifique ou d'un magasin de vente de produits ou services. Une vérification des données secrètes est effectuée par l'intermédiaire du lecteur et en communication avec la banque du titulaire de la montre 1.

Il est encore à noter que la clé publique de l'autorité de certification, par exemple de la société ou entreprise Swatch peut n'être distribuée qu'à des banques ou instituts financiers ou bancaires, qui sont partenaires du Swatch Group. Dans ce cas de figure, les données bancaires personnalisées peuvent être envoyées à la montre 1 après sa fabrication en passant par le terminal de communication intermédiaire, qui est le téléphone mobile 30 agnostique et comme tunnel de communication.

D'autres données peuvent aussi être certifiées, telles que le code d'identification du circuit intégré, qui peut être certifié EMV (Eurocard-Mastercard-Visa). En plus de protéger les données bancaires du titulaire de la montre 1, cela permet aussi d'identifier le circuit intégré spécifique de la montre et de certifier par exemple le fabricant dudit circuit intégré. Par ces caractéristiques, cela assure qu'il s'agit bien d'une montre originale Swatch. Uniquement les données secrètes sont dans la mémoire sécurisée du circuit intégré spécifique de la montre. Il n'y a ainsi pas de base de données, qui peut être piratée.

L'objet portable 1 est représenté de manière simplifié sur les figures 4a et 4b. Cet objet portable est de préférence une montre 1. Néanmoins, il peut être concevable également d'avoir un objet portable, qui est un bracelet, un collier, voire une bague dans la mesure, où il peut être inséré un circuit intégré spécifique au titulaire avec un moyen de communication à courte distance NFC.

A la figure 4a, il est représenté une vue simplifiée de dessus d'une montre-bracelet 1 dans lequel est disposé dans la boîte de montre, un circuit intégré 3, qui n'est pas encore personnalisé au titulaire de la montre. Ce circuit intégré 3 est relié à une antenne 2 par une interface de communication NFC bien connue. Un bouton-poussoir 4 ou couronne peut être prévu pour le réglage traditionnel de l'heure et de la date ou pour servir à la mise en fonction du circuit intégré pour une communication à courte distance NFC. Cependant cette mise en fonction de la communication peut aussi être automatiquement commandée par un téléphone mobile disposé à courte distance.

Le circuit intégré peut comprendre dans une partie hardware une interface de communication NFC (RF), une unité logique à processeur et une mémoire, qui peut être une mémoire non-volatile. Le circuit intégré peut comprendre également dans une partie logicielle, une machine virtuelle Java, un système d'exploitation, une première application bancaire, par exemple Visa, Mastercard ou Eurocard, une seconde application bancaire et d'autres applications possibles. Le système d'exploitation permet la mise en oeuvre de toutes les fonctions logicielles de base, de l'interface avec la partie hardware, des gestions de tous les périphériques et de la mémoire.

Il est à noter que des clés secrètes spécifiques au circuit intégré KpubIC, KprivIC, CertIC pour la mise en fonction de l'algorithme asymétrique sont mémorisées dans la mémoire non-volatile NVM. Ces clés sont notamment temporairement mémorisées avant la programmation ou personnalisation définitive du circuit intégré au terme du procédé de programmation selon l'invention.

A la figure 4b, il est représenté une vue simplifiée de dessus d'une montre-bracelet 1 dans lequel est disposé dans la boîte de montre, le circuit intégré 3, qui est personnalisé au titulaire de la montre au terme du procédé de programmation selon l'invention. Une fois que le circuit intégré 3 a reçu par l'antenne 2, les signaux RF des données cryptées ENC provenant de la banque du titulaire de la montre, une opération de décryptage des données est effectuée avec la clé privée KprivIC mémorisée. Les données secrètes ou de sécurité décryptées peuvent être mémorisées de manière définitive dans la mémoire non-volatile. Ces données secrètes peuvent être le nom du titulaire de la montre, ses clés secrètes et le numéro de son compte bancaire. Il peut être envisagé aussi de supprimer de la mémoire avant verrouillage de ces données secrètes, les clés privée et publique et le certificat numérique. Une fois personnalisée au titulaire de la montre avec ses données bancaires, la montre 1 avec le circuit intégré 3 lié à l'antenne 2, peut servir à effectuer tout paiement sans contact d'un produit ou service en communication avec un lecteur d'un lieu spécifique ou d'un magasin.

La figure 5 représente les différentes étapes du procédé de programmation de données secrètes ou de sécurité dans un circuit intégré spécifique d'un objet portable, qui est de préférence une montre. Les étapes 110 à 118 décrites ci-après constituent les étapes essentielles du procédé de programmation selon l'invention et peuvent suffire à elles seules pour définir la portée de l'invention.

Préliminairement à la programmation des données secrètes ou de sécurité du circuit intégré spécifique, il peut être prévu à l'étape 200 de générer des clés privée KprivAC et publique KpubAC d'une autorité de certification. Cette autorité de certification peut être par exemple une entreprise de fabrication d'une montre, ou une entité du groupe de fabrication, telle que Swatch Group. A l'étape 206, les clés privée KprivAC et publique KpubAC de l'autorité de certification sont mémorisées après génération dans une unité de sécurité, telle qu'un coffre. A l'étape 202, il est effectué une transmission de la clé publique KpubAC de l'autorité de certification aux banques, et notamment à des banques ou instituts financiers ou bancaires, qui sont partenaires du Swatch Group. A l'étape 204, les banques ou instituts financiers ou bancaires reçoivent la clé publique KpubAC, qu'ils conservent en mémoire.

Pour la programmation des données secrètes ou de sécurité selon l'invention, il peut être généré à l'étape 100 un jeu de clés privée KprivIC et publique KpubIC du circuit intégré. Cette génération de clés privée et publique peut être effectuée au terme de la fabrication du circuit intégré ou dans la fabrique de l'objet portable, tel que la montre. Ces clés privée KprivIC et publique KpubIC sont mémorisées au moins de manière temporaire dans une mémoire du circuit intégré, telle qu'une mémoire non-volatile. Ces clés privée et publique sont spécifiques à chaque circuit intégré fabriqué et dédicacé pour une fonction d'utilisation particulière dans la montre.

A l'étape 102, une fois que les clés privée KprivIC et publique KpubIC du circuit intégré sont mémorisées, une transmission de la clé publique KpubIC du circuit intégré est effectuée à l'autorité de certification, telle qu'à une entreprise du Swatch Group. Dès réception de cette clé publique KpubIC à l'étape 104, il est effectué un calcul du certificat numérique CertIC du circuit intégré sur la base de la clé privée générée KprivAC de l'autorité de certification. Ce certificat numérique est obtenu selon la formule générale CertIC = F(KpubIC, KprivAC). A l'étape 106, une fois que le certificat numérique du circuit intégré a été calculé, il est effectué une transmission du certificat CertIC au fabricant du circuit intégré ou de la montre. A l'étape 108, il est effectué une personnalisation du circuit intégré spécifique pour la montre fabriquée. Cette personnalisation consiste à mémoriser au moins de manière temporaire dans une mémoire du circuit intégré la clé publique KpubIC, la clé privée KprivIC et le certificat numérique du circuit intégré de montre CertIC.

A l'étape 110 une fois les clés privée KprivIC et publique KpubIC et le certificat CertIC mémorisés dans le circuit intégré, il y a une transmission de la clé publique KpubIC et du certificat numérique CertIC par l'antenne de la montre en liaison au circuit intégré à une banque ou à un institut financier ou bancaire. La transmission se passe à travers un terminal de communication, tel qu'un téléphone portable à proximité de la montre, ou par un système d'un magasin notamment Swatch, où la montre peut être achetée par le futur titulaire de la montre. A l'étape 112, il est effectué une vérification dans la banque ou l'institut financier ou bancaire du titulaire de la montre achetée du certificat numérique CertIC sur la base de la clé publique de l'autorité de certification KpubAC selon la formule V = G(CertIC, KpubAC). Si le certificat est validé, la banque ou l'institut financier ou bancaire génère des données secrètes ou de sécurité, telles que des données bancaires pour la montre à personnaliser. Ces données sont cryptées avec la clé publique KpubIC reçue du circuit intégré selon la formule EncryptedData = H(BankingData, KpubIC).

A l'étape 114, la banque ou l'institut financier ou bancaire transmet les données cryptées à destination du circuit intégré de la montre. Ces données cryptées passent tout d'abord par le terminal de communication agissant comme un tunnel avant d'être reçues par l'antenne de la montre. A l'étape 116 une fois que les données cryptées sont reçues par le circuit intégré, il est effectué une opération de décryptage des données cryptées avec la clé privée KprivIC du circuit intégré. Les données décryptées, relatives à des données secrètes du titulaire de la montre, notamment ses données bancaires, sont mémorisées dans la mémoire non-volatile du circuit intégré à l'étape 118. Ces données mémorisées peuvent être verrouillées de manière à ne pas pouvoir être détruites. Dans une étape subséquente 120, il peut encore être prévu d'effacer les données temporaires mémorisées dans la mémoire du circuit intégré pour libérer de la place mémoire.

La programmation des données secrètes ou de sécurité peut être effectuée de manière unique avec une seule transmission et réception depuis la montre de la clé publique et du certificat, et des données cryptées reçues de la banque. Après décryptage, le verrouillage des données secrètes mémorisées est réalisé éventuellement une seule fois. Ceci peut être très rapidement effectué dès l'achat de la montre par le titulaire tout en personnalisant sa montre pour pouvoir effectuer sans contact tout paiement d'un produit ou service par la suite.

A partir de la description qui vient d'être faite, plusieurs variantes du procédé de programmation de données secrètes ou de sécurité d'un circuit intégré spécifique d'un objet portable, tel qu'une montre, et l'objet portable muni du circuit intégré programmé selon le procédé peuvent être conçues par l'homme du métier sans sortir du cadre de l'invention définie par les revendications. L'objet portable peut être également un bracelet, une bague ou un collier par exemple pour autant qu'il soit possible d'insérer le circuit intégré et d'être capable d'établir une communication à courte distance. La programmation des données secrètes ou de sécurité du circuit intégré de l'objet portable peut aussi être effectuée directement à la banque ou à l'institut financier ou bancaire sans passer par un terminal de communication. Les données secrètes ou de sécurité peuvent être d'autres données que des données bancaires de manière à utiliser également l'objet portable avec le circuit intégré spécifique programmé pour la billetterie électronique ou l'accès sans contact d'un lieu ou la location d'un instrument, tel qu'un véhicule ou pour d'autres fonctions.

## Revendications

1. Procédé de programmation de données secrètes ou de sécurité, telles que des données bancaires, dans un circuit intégré spécifique (3) d'un objet portable, tel qu'une montre (1), pour lequel il est utilisé un algorithme de cryptage/décryptage asymétrique pour effectuer la programmation des données,
**caractérisé en ce que** le procédé comprend les étapes de :
- transmettre une clé publique (KpubIC) du circuit intégré (3) et un certificat numérique (CertIC), qui est généré par une autorité de certification sur la base d'une clé privée (KprivAC) de l'autorité de certification et de la clé publique du circuit intégré, de l'objet portable (1) à destination d'une banque (20) ou d'un institut financier ou bancaire,
- vérifier le certificat numérique (CertIC) dans la banque (20) ou l'institut financier ou bancaire au moyen d'une clé publique (KpubAC) de l'autorité de certification, et si le certificat numérique est validé,
- transmettre des données cryptées secrètes ou de sécurité, qui sont personnalisées à un titulaire de l'objet portable (1) de la banque (20) ou l'institut financier ou bancaire à destination de l'objet portable (1), et
- décrypter les données cryptées reçues par le circuit intégré spécifique (3) de l'objet portable (1) au moyen d'une clé privée (KprivIC) du circuit intégré (3), afin de mémoriser les données décryptées secrètes ou de sécurité personnalisées au titulaire de l'objet portable (1).

2. Procédé de programmation selon la revendication 1, pour lequel le circuit intégré (3) est relié à une antenne (2) de l'objet portable (1) pour la transmission et réception de signaux de données avec une banque (20) ou un institut financier ou bancaire d'un titulaire de l'objet portable, **caractérisé en ce que** la transmission de la clé publique (KpubIC) du circuit intégré (3) et du certificat numérique (CertIC) est effectuée via un terminal de communication (30), et **en ce que** la réception des données cryptées secrètes ou de sécurité par l'antenne (2) liée au circuit intégré (3) de l'objet portable (1) depuis la banque (20) ou l'institut financier ou bancaire est effectuée via le terminal de communication (30).

3. Procédé de programmation selon la revendication 2, pour lequel une communication à courte distance selon un protocole NFC est établie entre l'objet portable (1) et le terminal de communication, qui est un téléphone mobile (30) agissant comme un tunnel de communication.

4. Procédé de programmation selon la revendication 1, **caractérisé en ce que** les clés privée (KprivIC) et publique (KpubIC) du circuit intégré, ainsi que le certificat numérique (CertIC) sont mémorisés dans une mémoire non-volatile du circuit intégré (3) de manière temporaire avant l'étape de transmission de la clé publique (KpubIC) et du certificat numérique (CertIC), et **en ce qu'**une fois que les données cryptées reçues sont décryptées et mémorisées dans la mémoire du circuit intégré, les clés privée (KprivIC) et publique (KpubIC) du circuit intégré, ainsi que le certificat numérique (CertIC) sont effacés de la mémoire.

5. Procédé de programmation selon la revendication 1, **caractérisé en ce qu'**après vérification du certificat numérique, la banque (20) ou l'institut financier ou bancaire crypte des données bancaires relatives à un compte bancaire du titulaire de l'objet portable.

6. Procédé de programmation selon la revendication 1, **caractérisé en ce que** le procédé comprend des étapes préliminaires de :
- générer des clés privée (KprivIC) et publique (KpubIC) spécifiques du circuit intégré (3) lors de la fabrication du circuit intégré ou dans la fabrique de l'objet portable (1),
- transmettre la clé publique (KpubIC) du circuit intégré (3) à l'autorité de certification pour permettre le calcul du certificat numérique (CertIC) sur la base d'une clé privée (KprivAC) de l'autorité de certification,
- transmettre le certificat numérique (CertIC) au fabricant du circuit intégré (3) ou de l'objet portable (1) pour personnaliser le circuit intégré spécifique avec des données temporaires, telles que les clés privée et publique, et le certificat numérique, et avant de transmettre la clé publique (KpubIC) du circuit intégré (3) et le certificat numérique (CertIC) à la banque (20) ou à l'institut financier ou bancaire.

7. Procédé de programmation selon la revendication 1, **caractérisé en ce que** le procédé comprend des étapes préliminaires de :
- générer des clés privée (KprivAC) et publique (KpubAC) de l'autorité de certification,
- transmettre la clé publique (KpubAC) de l'autorité de certification à des banques (20), et
- mémoriser les clés privée (KprivAC) et publique (KpubAC) de l'autorité de certification dans une unité de sécurité.

8. Objet portable (1) muni d'un circuit intégré spécifique (3) adapté à mémoriser des données secrètes ou de sécurité, telles que des données bancaires, personnalisées et programmées selon le procédé de programmation selon l'une des revendications précédentes, l'objet portable comprenant également une antenne (2) en liaison avec le circuit intégré (3), qui comprend une interface de communication pour la transmission et la réception de signaux de données, **caractérisé en ce que** le circuit intégré (3) comprend une unité logique à processeur, un système d'exploitation et une mémoire pour la mémorisation de données secrètes et de sécurité dédicacées au titulaire de l'objet portable, et **en ce que** le circuit intégré (3) est configuré pour garder en mémoire de manière temporaire des clés privée (KprivIC) et publique (KpubIC) du circuit intégré et un certificat numérique (CertIC) du circuit intégré, alors que les données secrètes ou de sécurité après programmation sont verrouillées dans la mémoire non-volatile.

9. Objet portable (1) selon la revendication 8, **caractérisé en ce que** l'objet portable est une montre avec une antenne dans une boîte de montre reliée à l'interface de communication du circuit intégré (3).

10. Objet portable (1) selon la revendication 8, **caractérisé en ce que** l'interface de communication du circuit intégré (3) est une interface de communication à courte distance (NFC) pour être en mesure d'établir une communication à travers un terminal de communication (30) et à destination d'une banque (20) ou d'un institut financier ou bancaire.

11. Objet portable (1) selon la revendication 10, **caractérisé en ce que** l'objet portable (1) comprend au moins un bouton-poussoir (4) pour le réglage traditionnel de l'heure et de la date ou pour servir à la mise en fonction du circuit intégré pour une communication à courte distance (NFC).

## Patentansprüche

1. Verfahren zum Programmieren von geheimen Daten oder Sicherheitsdaten wie etwa von Bankdaten in einer spezifischen integrierten Schaltung (3) eines tragbaren Gegenstands wie etwa einer Uhr (1), für das ein asymmetrischer Verschlüsselungs-/Entschlüsselungsalgorithmus verwendet wird, um die Programmierung von Daten auszuführen,
**dadurch gekennzeichnet, dass** das Verfahren die folgenden Schritte umfasst:
- Senden eines öffentlichen Schlüssels (KpubIC) der integrierten Schaltung (3) und eines digitalen Zertifikats (CertIC), das durch eine Zertifizierungsstelle auf der Basis eines privaten Schlüssels (KprivAC) der Zertifizierungsstelle und des öffentlichen Schlüssels der integrierten Schaltung des tragbaren Gegenstands (1) erzeugt wird, zu einer Bank (20) oder zu einem Finanz- oder Bankinstitut,
- Verifizieren des digitalen Zertifikats (CertIC) in der Bank (20) oder dem Finanz- oder Bankinstitut mittels eines öffentlichen Schlüssels (KpubAC) der Zertifizierungsstelle, und, falls das digitale Zertifikat gültig ist,
- Senden von verschlüsselten geheimen Daten oder Sicherheitsdaten, die für den Inhaber des tragbaren Gegenstands (1) personalisiert sind, von der Bank (20) oder dem Finanz- oder Bankinstitut zu dem tragbaren Gegenstand (1), und
- Entschlüsseln der empfangenen verschlüsselten Daten durch die spezifische integrierte Schaltung (3) des tragbaren Gegenstands (1) mittels eines privaten Schlüssels (KprivIC) der integrierten Schaltung (3), um die entschlüsselten geheimen Daten oder Sicherheitsdaten, die für den Inhaber des tragbaren Gegenstands (1) personalisiert sind, zu speichern.

2. Programmierungsverfahren nach Anspruch 1, wobei die integrierte Schaltung (3) mit einer Antenne (2) des tragbaren Gegenstands (1) verbunden ist, um Datensignale zu einer Bank (20) oder einem Finanz- oder Bankinstitut eines Inhabers des tragbaren Gegenstands zu senden oder hiervon zu empfangen, **dadurch gekennzeichnet, dass** das Senden des öffentlichen Schlüssels (KpubIC) der integrierten Schaltung (3) und des digitalen Zertifikats (CertIC) über ein Kommunikationsendgerät (30) ausgeführt wird und dass das Empfangen geheimer verschlüsselter Daten oder verschlüsselter Sicherheitsdaten über die Antenne (2), die mit der integrierten Schaltung (3) des tragbaren Gegenstands (1) verbunden ist, von der Bank (20) oder dem Finanz- oder Bankinstitut über das Kommunikationsendgerät (30) ausgeführt wird.

3. Programmierungsverfahren nach Anspruch 2, wobei zwischen dem tragbaren Gegenstand (1) und dem Kommunikationsendgerät, das ein als ein Kommunikationstunnel arbeitendes Mobiltelefon (30) ist, eine kurzreichweitige Kommunikation gemäß einem NFC-Protokoll aufgebaut wird.

4. Programmierungsverfahren nach Anspruch 1, **dadurch gekennzeichnet, dass** der private Schlüssel (KprivIC) und der öffentliche Schlüssel (KpubIC) der integrierten Schaltung sowie das digitale Zertifikat (CertIC) vor dem Schritt des Sendens des öffentlichen Schlüssels (KpubIC) und des digitalen Zertifikats (CertIC) in einem nichtflüchtigen Speicher der integrierten Schaltung (3) temporär gespeichert werden und dass, sobald die empfangenen verschlüsselten Daten entschlüsselt und in dem Speicher der integrierten Schaltung gespeichert worden sind, der private Schlüssel (KprivIC) und der öffentliche Schlüssel (KpubIC) der integrierten Schaltung sowie das digitale Zertifikat (CertIC) aus dem Speicher gelöscht werden.

5. Programmierungsverfahren nach Anspruch 1, **dadurch gekennzeichnet, dass** nach der Verifikation des digitalen Zertifikats die Bank (20) oder das Finanz- oder Bankinstitut die Bankdaten, die auf ein Bankkonto des Inhabers des tragbaren Gegenstands bezogen sind, verschlüsselt.

6. Programmierungsverfahren nach Anspruch 1, **dadurch gekennzeichnet, dass** das Verfahren die folgenden vorhergehenden Schritte umfasst:
- Erzeugen eines für die integrierte Schaltung (3) spezifischen privaten Schlüssels (KprivIC) und eines öffentlichen Schlüssels (KpubIC) bei der Herstellung der integrierten Schaltung oder in der Fabrik des tragbaren Gegenstands (1),
- Senden des öffentlichen Schlüssels (KpubIC) der integrierten Schaltung (3) zu der Zertifizierungsstelle, um das Berechnen des digitalen Zertifikats (CertIC) auf der Basis eines privaten Schlüssels (KprivAC) der Zertifizierungsstelle zu ermöglichen,
- Senden des digitalen Zertifikats (CertIC) an den Hersteller der integrierten Schaltung (3) oder des tragbaren Gegenstands (1) vor dem Senden des öffentlichen Schlüssels (KpubIC) der integrierten Schaltung (3) und des digitalen Zertifikats (CertIC) an die Bank (20) oder das Finanz- oder Bankinstitut, um die spezifische integrierte Schaltung mit temporären Daten wie etwa dem privaten und dem öffentlichen Schlüssel und dem digitalen Zertifikat zu personalisieren.

7. Programmierungsverfahren nach Anspruch 1, **dadurch gekennzeichnet, dass** das Verfahren die folgenden vorhergehenden Schritte umfasst:
- Erzeugen eines privaten Schlüssels (KprivAC) und eines öffentlichen Schlüssels (KpubAC) der Zertifizierungsstelle,
- Senden des öffentlichen Schlüssels (KpubAC) der Zertifizierungsstelle an Banken (20) und
- Speichern des privaten Schlüssels (KprivAC) und des öffentlichen Schlüssels (KpubAC) der Zertifizierungsstelle in einer Sicherheitseinheit.

8. Tragbarer Gegenstand (1), der mit einer spezifischen integrierten Schaltung (3) versehen ist, die dafür ausgelegt ist, geheime Daten oder Sicherheitsdaten, wie etwa Bankdaten zu speichern, die gemäß dem Programmierungsverfahren nach einem der vorhergehenden Ansprüche personalisiert und programmiert sind, wobei der tragbare Gegenstand ferner eine Antenne (2) umfasst, die mit der integrierten Schaltung (3) verbunden ist, die eine Kommunikationsschnittstelle aufweist, um Datensignale zu senden und zu empfangen, **dadurch gekennzeichnet, dass** die integrierte Schaltung (3) eine Logikeinheit mit Prozessor, ein Betriebssystem und einen Speicher zum Speichern von geheimen Daten oder Sicherheitsdaten, die für den Inhaber des tragbaren Gegenstands bestimmt sind, umfasst und dass die integrierte Schaltung (3) konfiguriert ist, einen privaten Schlüssel (KprivIC) und einen öffentlichen Schlüssel (KpubIC) der integrierten Schaltung und ein digitales Zertifikat (CertIC) der integrierten Schaltung temporär in einem Speicher zu halten, während die geheimen Daten oder Sicherheitsdaten nach der Programmierung in dem nichtflüchtigen Speicher gesperrt sind.

9. Tragbarer Gegenstand (1) nach Anspruch 8, **dadurch gekennzeichnet, dass** der tragbare Gegenstand eine Uhr mit einer mit der Kommunikationsschnittstelle der integrierten Schaltung (3) verbundenen Antenne in einem Uhrengehäuse ist.

10. Tragbarer Gegenstand (1) nach Anspruch 8, **dadurch gekennzeichnet, dass** die Kommunikationsschnittstelle der integrierten Schaltung (3) eine kurzreichweitige Kommunikationsschnittstelle (NFC) ist, um in der Lage zu sein, eine Kommunikation über ein Kommunikationsendgerät (30) zu einer Bank (20) oder zu einem Finanz- oder Bankinstitut aufzubauen.

11. Tragbarer Gegenstand (1) nach Anspruch 10, **dadurch gekennzeichnet, dass** der tragbare Gegenstand (1) mindestens einen Druckknopf (4) für die herkömmliche Einstellung der Zeit und des Datums aufweist, der außerdem dazu dient, die integrierte Schaltung für eine kurzreichweitige Kommunikation (NFC) zu betreiben.

## Claims

1. Method for programming confidential or security data, such as banking data, in an application-specific integrated circuit (3) of a portable object, such as a watch (1), for which is used an asymmetric encryption/decryption algorithm to perform data programming,
**characterized in that** the method includes the steps of:
- transmitting a public key (KpubIC) of the integrated circuit (3) and a digital certificate (CertIC) which is generated by a certification authority on the basis of a private key (KprivAC) of the certification authority and of the integrated circuit public key, from the portable object (1) to a bank (20) or a financial or banking institution,
- verifying the digital certificate (CertIC) in the bank (20) or the financial or banking institution by means of a public key (KpubAC) of the certification authority, and if the digital certificate is validated,
- transmitting encrypted confidential or security data, which is personalized to an owner of the portable object (1) from the bank (20) or the financial or banking institution to the portable object (1), and
- decrypting the encrypted data received by the application-specific integrated circuit (3) of the portable object (1) by means of a private key (KprivIC) of the integrated circuit (3), in order to store the decrypted confidential or security data personalized to the owner of the portable object (1).

2. Programming method according to claim 1, wherein the integrated circuit (3) is connected to an antenna (2) of the portable object (1) for the transmission and reception of data signals with a bank (20) or a financial or banking institution of the portable object owner, **characterized in that** the transmission of the public key (KpubIC) of the integrated circuit (3) and of the digital certificate (CertIC) is achieved via a communication terminal (30), and **in that** the reception of the encrypted confidential or security data by the antenna (2) connected to the integrated circuit (3) of the portable object (1) from the bank (20) or the financial or banking institution is achieved via the communication terminal (30).

3. Programming method according to claim 2, wherein a short-range communication using a NFC protocol is established between the portable object (1) and the communication terminal, which is a mobile telephone (30) acting as a communication tunnel.

4. Programming method according to claim 1, **characterized in that** the private key (KprivIC) and public key (KpubIC) of the integrated circuit, and the digital certificate (CertIC) are temporarily stored in a non-volatile memory of the integrated circuit (3) prior to the step of transmitting the public key (KpubIC) and the digital certificate (CertIC), and **in that** once the received encrypted data is decrypted and stored in the integrated circuit memory, the private key (KprivIC) and public key (KpubIC) of the integrated circuit, and the digital certificate (CertIC) are deleted from the memory.

5. Programming method according to claim 1, **characterized in that**, after verification of the digital certificate, the bank (20) or the financial or banking institution encrypts banking data relating to a bank account of the owner of the portable object.

6. Programming method according to claim 1, **characterized in that** the method includes the preliminary steps of:
- generating private (KprivIC) and public (KpubIC) keys specific to the integrated circuit (3) during the manufacture of the integrated circuit or in the manufacturing facility of the portable object (1),
- transmitting the public key (KpubIC) of the integrated circuit (3) to the certification authority for the calculation of the digital certificate (CertIC) on the basis of a private key (KprivAC) of the certification authority,
- transmitting the digital certificate (CertIC) to the manufacturer of the integrated circuit (3) or of the portable object (1) to personalize the application-specific integrated circuit with temporary data, such as the private and public keys, and the digital certificate, and prior to transmitting the public key (KpubIC) of the integrated circuit (3) and the digital certificate (CertIC) to the bank (20) or to the financial or banking institution.

7. Programming method according to claim 1, **characterized in that** the method includes the preliminary steps of:
- generating private (KprivAC) and public (KpubAC) keys of the certification authority,
- transmitting the public key (KpubAC) of the certification authority to banks (20), and
- storing the private (KprivAC) and public (KpubAC) keys of the certification authority in a security unit.

8. Portable object (1) provided with an application-specific integrated circuit (3) arranged to store confidential or security data, such as banking data personalized and programmed in accordance with the programming method according to any of the preceding claims, the portable object also comprising an antenna (2) connected to the integrated circuit (3), which comprises a communication interface for the transmission and reception of data signals, **characterized in that** the integrated circuit (3) includes a processor logic unit, an operating system and a memory for storing confidential and security data specific to the owner of the portable object, and **in that** the integrated circuit (3) is configured to temporarily store in its memory the private (KprivIC) and public (KpubIC) keys of the integrated circuit and a digital certificate (CertIC) of the integrated circuit, whereas after programming the confidential or security data is locked in the non-volatile memory.

9. Portable object (1) according to claim 8, **characterized in that** portable object is a watch with an antenna inside a watch case connected to the communication interface of the integrated circuit (3).

10. Portable object (1) according to claim 8, **characterized in that** the communication interface of the integrated circuit (3) is a short-range communication interface (NFC) in order to establish a communication through a communication terminal (30) and to a bank (20) or to a financial or banking institution.

11. Portable object (1) according to claim 10, **characterized in that** the portable object (1) includes at least one push-button (4) for the conventional setting of the time and date or to be used for actuating the integrated circuit for a short range communication (NFC).
